# EUROPÄISCHE PATENTSCHRIFT

(11) **EP 3 692 078 B1**
(45) Veröffentlichungstag und Bekanntmachung des Hinweises auf die Patenterteilung: **03.03.2021**
(21) Anmeldenummer: 17783432.2
(22) Anmeldetag: 04.10.2017
(51) Int. Cl.: C08F 2/20, B01J 19/00, B01J 19/18, F28D 7/06, F28D 7/16, F28F 9/013, F28F 9/22, F28G 9/00

(54) **VERFAHREN ZUR POLYMERISATION MIT EXTERNER KÜHLUNG**
METHOD OF POLYMERISATION WITH EXTERNAL COOLING
PROCÉDÉ DE POLYMÉRISATION AVEC UNE REFRIGÉRATION EXTERNE

(43) Veröffentlichungstag der Anmeldung: 12.08.2020
(73) Patentinhaber: Wacker Chemie AG, 81737 München (DE)
(72) Erfinder: ECKL, Bernhard, 84489 Burghausen (DE); KAISER, Wilhelm, 83308 Trostberg (DE)
(74) Vertreter: Mai, Marit
(86) Internationale Anmeldenummer: PCT/EP2017/075161
(87) Internationale Veröffentlichungsnummer: WO 2019/068318

(56) Entgegenhaltungen:
- EP-A1- 2 072 540
- EP-A2- 0 226 204
- DE-A1- 2 339 364
- DE-A1-102007 040 850
- DE-A1-102011 005 388
- US-A- 3 578 649
- US-A- 4 120 350
- US-A1- 2001 039 329
- US-A1- 2016 167 012

## Beschreibung

Die Erfindung betrifft ein Verfahren zur Herstellung von Polymerisaten in Form deren wässrigen Polymerdispersionen mittels radikalisch initiierter Polymerisation in einem Polymerisationsreaktor, welcher mit einem externen Kühlkreislauf mit mindestens einem Wärmetauscher ausgerüstet ist. Ein solches Verfahren entsprechend dem Oberbegriff des Anspruchs 1 ist aus der EP 0 834 518 A1 und der WO 2009/027212 A1 bekannt.

Die Herstellung von wässrigen Polymerdispersionen erfolgt mittels Polymerisation im Batchverfahren oder in kontinuierlichen Verfahren. Bei Polymerisationsreaktionen von ethylenisch ungesättigten Monomeren fällt eine hohe Polymerisationswärme an, die bei üblicher, temperaturgeregelter Fahrweise über Wärmeaustauschflächen der Reaktion entzogen werden muss. Die maximale Reaktionsrate und damit die Produktivität sind in großtechnischen Anwendungen oft durch die verfügbare Größe der Wärmeaustauschfläche und deren Ausnutzung bestimmt.

Nachteilig ist, dass die bei der Polymerisation erzeugten großen Energiemengen nur unzureichend durch reaktorinterne Kühlaggregate abgeführt werden können. Bei den reaktorinternen Kühlaggregaten handelt es sich im Allgemeinen um einen Doppelmantel, in welchem Kühlmedium den Reaktor umfließt, oder um Kühlschlangen, welche an der Reaktorinnenwand angebracht sind. Durch die mit diesen Einrichtungen bedingte limitierte Wärmeabfuhr resultieren teilweise sehr lange Prozesszeiten, die die Wirtschaftlichkeit des Verfahrens beeinträchtigen. Zur besseren Wärmeabfuhr und Beschleunigung des Prozesses ist es bekannt, die Polymerisation so zu führen, dass das polymerisierende Medium durch einen Kreislauf einem externen Kühler zugeführt wird und von dort wieder in den Reaktor zurückgeführt wird.

Die EP 0 834 518 A1 beschreibt eine Vorrichtung zur Polymerisation mit Reaktor und externem Kühlkreislauf, welcher eine scherungsarme Pumpe und einen Wärmetauscher mit im Wesentlichen laminarem Strömungsprofil aufweist. Bevorzugt wird ein Spiralwärmetauscher. Die EP 2 106 849 A1 betrifft ein Verfahren zur Emulsionspolymerisation, wobei das Reaktionsgemisch in einem externen Platten-Rahmen-Wärmetauscher gekühlt wird. In der WO 2009/021930 A1 wird ein kontinuierliches Polymerisationsverfahren beschrieben, welches in einer Kaskade mit mindestens zwei hintereinander geschalteten Wärmetauschern durchgeführt wird. Als Wärmetauscher werden Röhrenwärmetauscher oder Rohrbündelwärmetauscher als bevorzugt genannt. Bei dem Verfahren aus der WO 2009/027212 A1 wird die Polymerisation in einem Rührkessel mit externem Kühlkreislauf mit Statik-Mischer-Wärmetauscher durchgeführt.

Die Ausnutzung der Wärmeaustauschfläche kann bei gegebener verfügbarer Temperaturdifferenz ingenieurtechnisch durch einen Wärmdurchgangskoeffizienten beschrieben werden. Eine Verbesserung der Kühlleistung eines Wärmetauschers mittels Erhöhung der Wärmeaustauschfläche stößt an technische Grenzen und verursacht hohe apparative Kosten. Darüber hinaus verschlechtert sich die Ausnutzung der Wärmetauschfläche wegen Ablagerungen von Polymerisat auf der Wärmeaustauschfläche (Fouling). Insbesondere bei batchweise betriebenen Wärmeaustauschapparaten ist dieser Effekt bei unzureichender Abreinigung von Charge zu Charge zu beobachten.

Es bestand daher die Aufgabe, die externe Kühlung bei Polymerisationsverfahren zu verbessern.

Gegenstand der Erfindung ist ein Verfahren zur Herstellung von Polymerisaten in Form deren wässrigen Polymerdispersionen mittels radikalisch initiierter Polymerisation in einem Polymerisationsreaktor, welcher mit einem externen Kühlkreislauf mit einer Pumpe und mit mindestens einem Wärmetauscher ausgerüstet ist, dadurch gekennzeichnet, dass als Wärmetauscher ein Rohrbündel-Wärmetauscher installiert wird, welcher so betrieben wird, dass das Kühlmittel durch die Rohre des Rohrbündels geführt wird und das zu kühlende Polymerisationsgemisch von außen an die Rohre des Rohrbündels geführt wird.

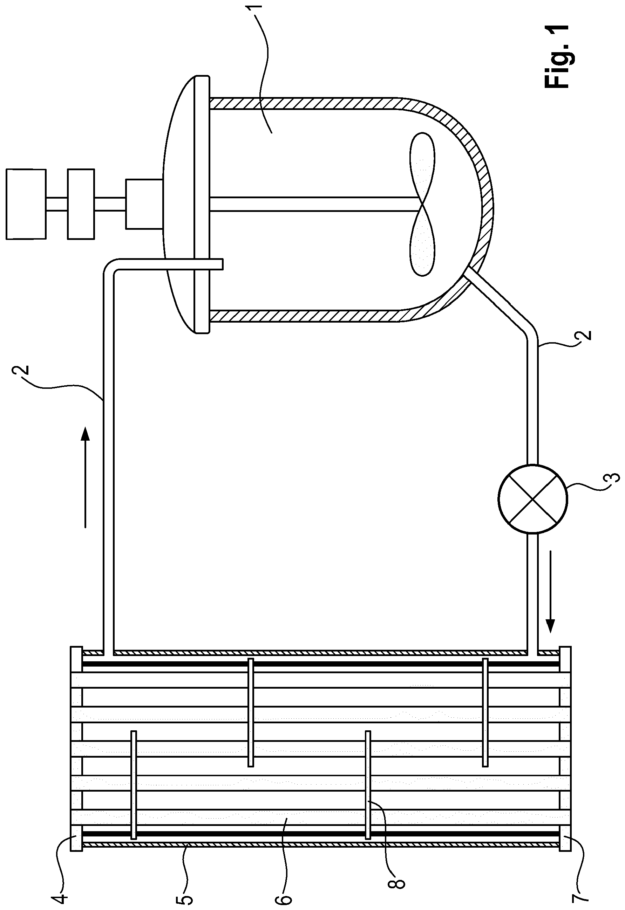

Figur 1 zeigt eine schematische Darstellung der Vorrichtung zur Durchführung des Verfahrens:
Geeignete Polymerisationsreaktoren (1) sind entsprechend dimensionierte Stahlreaktoren, welche als Druckreaktoren oder Drucklosreaktoren ausgelegt sein können, und mit den üblichen Rühreinrichtungen, Heiz- und Kühlsystemen, Mess- und Regeleinrichtungen, sowie Leitungen zur Zuführung der Edukte bzw. Abführung der Produkte ausgerüstet sind.

Der externe Kühlkreislauf umfasst eine entsprechend dimensionierte Rohrleitung (2), in welche Pumpe (3) und RohrbündelWärmetauscher (4) integriert sind. Im Allgemeinen befindet sich der Anschluss zur Ausleitung des Polymerisationsgemisches in den externen Kühlkreislauf im unteren Drittel des Reaktors, bevorzugt am Boden des Reaktors. Der Anschluss zur Rückführung des Polymerisationsgemisches aus dem externen Kühlkreislauf in den Reaktor befindet sich an einer vom Anschluss zur Ausleitung verschiedenen Stelle, im Allgemeinen im oberen Drittel des Reaktors, bevorzugt am Kopf des Reaktors.

Der verwendete Pumpentyp ist unkritisch. Geeignet sind beispielsweise Freistrompumpen (Vortex) oder Verdrängungspumpen. Bevorzugt werden Verdrängungspumpen, besonders bevorzugt sind Schraubenspindelpumpen. Die Pumpe ist vorzugsweise so dimensioniert, dass sie einem Druck von bis zu 100 bar, vorzugsweise 40 bis 100 bar, standhält. Der Stundendurchsatz hängt von der Dimensionierung des Reaktors ab. Im Allgemeinen ist der externe Kühlkreislauf so gestaltet, dass die Durchflussrate (Stundendurchsatz) mindestens das doppelte Reaktorvolumen pro Stunde, bevorzugt das 3- bis 15-fache des Reaktorvolumens pro Stunde, beträgt. Übliche Werte liegen im Bereich von 50 bis 400 m³/h.

Der Rohrbündelwärmetauscher (4) ist vorzugsweise aus Stahl gefertigt. Er besteht in der Regel aus einem zylinderförmigen Behälter (5), in welchem eine Anzahl im Allgemeinen gerader, zylindrischer Rohre (6) parallel angeordnet sind (das Rohrbündel). Die Rohre sind vorzugsweise so angeordnet, dass jedes Rohr von jedem benachbarten Rohr denselben Abstand hat, die sogenannte Teilung. Die Rohre werden an einem oder an beiden Enden jeweils von gelochten, kreisförmigen Platten (7), den Rohrböden, gehalten.

Zwischen den Enden der Rohrbündel können zusätzliche gelochte Platten (8) mit kreisförmiger oder teilkreisförmiger, beispielsweise halbkreisförmiger, Ausgestaltung, und quer zur Rohrachse ausgerichtet, zur Halterung der Rohre oder zur Umlenkung des zu kühlenden Polymerisationsgemisches angeordnet werden.

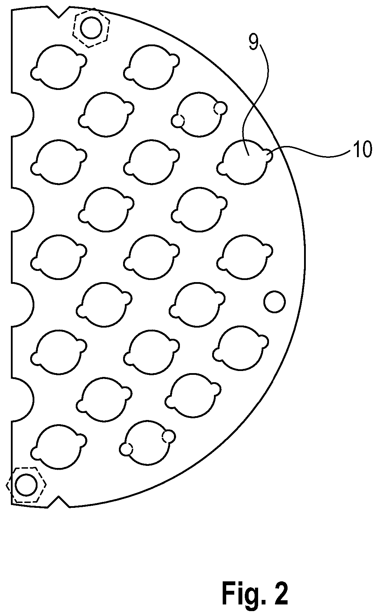

Bevorzugt werden U-Rohr-Rohrbündelwärmetauscher bei denen die Rohre in U-Form vorliegen, und die in U-Form gebogenen, zylindrischen Einzelrohre hintereinander und parallel angeordnet sind. Geeignete Rohrbündelwärmetauscher mit geraden Rohren oder in U-Form gebogenen Rohren sowie deren Dimensionierung und Betriebsweise sind dem Fachmann bekannt und im Handel erhältlich. Figur 2 zeigt eine schematische Darstellung der gelochten Platten, welche als Rohrboden (7) oder als Einbau (8) zur Halterung oder Umlenkung eingebaut werden:
Die Bohrungen (9) der gelochten Platten, durch welche die einzelnen Rohre des Rohrbündels geführt werden, sind vorzugsweise kreisförmig und mit eckigen oder runden Aussparungen (10) erweitert. Besonders bevorzugt sind die kreisförmigen Bohrungen (9) mit einer runden Aussparung in Form eines angeschnittenen Kreises (10) erweitert.

Der Rohrbündelwärmetauscher wird vorzugsweise senkrecht aufgestellt. In einer bevorzugten Ausführungsform wird das zu kühlende Polymerisationsgemisch am unteren Ende so zugeführt, dass es die Rohre des Rohrbündels außen umströmt. Das dabei gekühlte Polymerisationsgemisch wird am oberen Ende entnommen und in den Polymerisationsreaktor zurückgeführt. Die Rohre des Rohrbündel-wärmetauschers werden von Kühlmedium, vorzugsweise Wasser, im Gegenstrom oder Gleichstrom zum Polymerisationsgemisch, durchströmt.

Mittels der Aussparungen wird erreicht, dass die Rohre bei der Reinigung mit einem Spülmittel, vorzugsweise Wasser, welches am oberen Ende des Rohrbündel-Wärmetauschers aufgegeben wird, effektiv umspült werden. Damit kann das Anlegen von Polymerisat verhindert, zumindest reduziert werden, und es können Anlagerungen leicht abgespült werden. Standzeiten zur Reinigung des Wärmetauschers werden damit vermieden, zumindest drastisch reduziert.

Mit der Maßnahme das zu kühlende Polymerisationsgemisch nicht durch die Rohre zu führen, sondern außen an den Rohren vorbei (inverse Fahrweise), wird eine deutlich verbesserte Ausnutzung gegebener Wärmeaustauschflächen erreicht. Im Vergleich zur konventionellen Verfahrensweise wird bei inverser Fahrweise der Wärmedurchgangskoeffizient mehr als verdoppelt. Eine weitere Verbesserung des Wärmetauschs resultiert aufgrund der Reduzierung der Wandanlagerung, welche man aufgrund einer effektiveren Spülung der Außenwände der Rohre erhält. Diese bessere Spülung wird aufgrund der Aussparungen an den Bohrungen zur Aufnahme der Rohre erhalten, welche den Zulauf und Ablauf der Spülflüssigkeit optimieren.

Bei dem Verfahren zur Herstellung von Polymerisaten in Form deren wässrigen Polymerdispersionen mittels radikalisch initiierter Polymerisation können beliebige ethylenisch ungesättigte Monomere, in wässrigem Medium, in Gegenwart von beliebigen Schutzkolloiden und/oder Emulgatoren und nach radikalischer Initiierung zur Polymerisation gebracht werden. Als ethylenisch ungesättigte Monomere werden im allgemeinen ein oder mehrere Monomeren aus der Gruppe enthaltend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide eingesetzt. Bevorzugt wird das Verfahren zur Polymerisation von Vinylester, vorzugsweise in Gegenwart von Ethylen, und gegebenenfalls weiteren Comonomeren eingesetzt.

Geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 11 C-Atomen, beispielsweise veoVa9^{R} oder VeoVa10^{R} (Handelsnamen der Firma Hexion). Besonders bevorzugt ist Vinylacetat. Die genannten Vinylester werden im Allgemeinen in einer Menge von 30 bis 100 Gew.-%, vorzugsweise 30 bis 90 Gew.-%, jeweils bezogen auf das Gesamtgewicht der Monomere, polymerisiert.

Ethylen wird im Allgemeinen in einer Menge von 1 bis 40 Gew.-%, bezogen auf das Gesamtgewicht der Monomere, copolymerisiert.

Geeignete weitere Comonomeren sind solche aus der Gruppe der Ester der Acrylsäure oder Methacrylsäure, der Vinylhalogenide wie Vinylchlorid, der Olefine wie Propylen. Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat. Diese Comonomere werden gegebenenfalls in einer Menge von 1 bis 40 Gew.-%, bezogen auf das Gesamtgewicht der Monomere, copolymerisiert.

Gegebenenfalls können noch 0,05 bis 10 Gew.-%, bezogen auf das Gesamtgewicht des Monomergemisches, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure.

Bevorzugt werden Comonomergemische von Vinylacetat mit 1 bis 40 Gew.-% Ethylen; sowie
Comonomermischungen von Vinylacetat mit 1 bis 40 Gew.-% Ethylen und 1 bis 50 Gew.-% von einem oder mehreren weiteren Comonomeren aus der Gruppe Vinylester mit 1 bis 15 C-Atomen im Carbonsäurerest wie Vinylpropionat, Vinyllaurat, Vinylester von alpha-verzweigten Carbonsäuren mit 9 bis 11 C-Atomen wie VeoVa9, VeoVa10, VeoVa11; und
Gemische von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Gemische mit 30 bis 75 Gew.-% Vinylacetat, 1 bis 30 Gew.-% Vinyllaurat oder Vinylester einer alpha-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
sowie Gemische mit Vinylacetat, 1 bis 40 Gew.-% Ethylen und 1 bis 60 Gew.-% Vinylchlorid; wobei
die Gemische noch die genannten Hilfsmonomere in den genannten Mengen enthalten können, und sich die Angaben in Gew.-% auf jeweils 100 Gew.-% aufaddieren.

Die Polymerisationstemperatur beträgt im Allgemeinen 40°C bis 100°C, vorzugsweise 60°C bis 90°C. Die Initiierung der Polymerisation erfolgt mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid Azobisisobutyronitril. Die genannten Initiatoren werden im Allgemeinen in einer Menge von 0,01 bis 2,0 Gew.-%, bezogen auf das Gesamtgewicht der Monomere, eingesetzt. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Die Reduktionsmittelmenge beträgt vorzugsweise 0,015 bis 3 Gew.-%, bezogen auf das Gesamtgewicht der Monomere.

Geeignete Schutzkolloide sind vollverseifte oder teilverseifte Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)-acrylaten mit carboxylfunktionellen Comonomereinheiten, Poly-(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugte Schutzkolloide sind teilverseifte oder vollverseifte Polyvinylalkohole. Bevorzugt sind teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Es können auch Gemische der genannten Polyvinylalkohole eingesetzt werden. Die genannten Schutzkolloide sind mittels dem Fachmann bekannter Verfahren zugänglich. Die Schutzkolloide werden im Allgemeinen in einer Menge von insgesamt 1 bis 20 Gew.-%, bezogen auf das Gesamtgewicht der Monomere, bei der Polymerisation zugesetzt.

Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten. Die Emulgatoren werden im Allgemeinen in einer Menge von insgesamt 0,5 bis 5 Gew.-%, bezogen auf das Gesamtgewicht der Monomere, bei der Polymerisation zugesetzt.

Die Monomere können im Reaktor insgesamt vorgelegt oder zudosiert werden. Vorzugsweise wird so vorgegangen, dass 50 bis 100 Gew.-%, insbesondere mehr als 70 Gew.-%, bezogen auf das Gesamtgewicht, der Monomere vorgelegt und der Rest zudosiert wird. Die Dosierungen können separat (räumlich und zeitlich) durchgeführt werden, oder die zu dosierenden Komponenten können alle oder teilweise voremulgiert dosiert werden. Der Schutzkolloid- und/oder Emulgator-Anteil kann im Reaktor sowohl vollständig vorgelegt werden, als auch teilweise dosiert werden. Die Polymerisation wird vorzugsweise mit einem Redoxsystem aus Oxidations- und Reduktionskomponente initiiert. Der Monomerumsatz wird mit der Initiatordosierung gesteuert.

Nach Abschluss der Polymerisation im Reaktor kann zur Restmonomerentfernung in Anwendung bekannter Methoden in einem Drucklosreaktor nachpolymerisiert. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die damit erhältlichen wässrigen Dispersionen haben im Allgemeinen einen Feststoffgehalt von 30 bis 75 Gew.-%, vorzugsweise von 50 bis 60 Gew.-%.

Die nachfolgenden Beispiele dienen der weiteren Erläuterung der Erfindung:

### Vergleichsbeispiel 1:

Die Vorrichtung zur Durchführung der Polymerisation umfasste einen Druckreaktor mit einem Volumen von ca. 590 Liter, welcher mit einem Rührer und einem Kühlmantel ausgestattet war und an einen externen Kühlkreislauf mit Wärmetauscher angeschlossen war. Als Wärmetauscher wurde im Kühlkreislauf ein U-Rohrbündelwärmetauscher mit einem Nenndurchmesser von DN 250 installiert, welcher mit 15 U-Rohren mit einer Rohrlänge von 2500 mm ausgestattet war. Der externe Kühlkreislauf wurde mit einer Exzenterschneckenpumpe betrieben und war so geschaltet, dass die U-Rohre vom Polymerisationsgemisch durchströmt wurden, welche vom Kühlwasser umströmt wurden.

Im Druckreaktor wurden 120 kg entionisiertes Wasser, 92 kg einer 20 %-igen Lösung eines Polyvinylalkohols mit einem Hydrolysegrad von 88 Mol-% und einer Viskosität nach Höppler von 4 mPas, sowie 236 kg Vinylacetat und 19 kg Ethylen vorgelegt. Der pH-Wert wurde mit 140 g Ameisensäure auf 4.0 eingestellt, und das Gemisch nach Zugabe von 50 ml 10 %-igem Eisenammoniumsulfat auf 55°C aufgeheizt.
Bei Erreichen der Solltemperatur wurden die Initiatordosierungen mit 750 g/h gestartet:
Oxidationsmittel: 3 %-ige Lösung von tert. Butylhydroperoxid Reduktionsmittel: 5 %-ige Lösung von Natriumhydroxymethansulfinat (Brüggolit).

Mit Beginn der Polymerisation wurde der Reaktorinhalt mit einer Rate von 3 m³/h durch den externen Kreislauf gepumpt. Zeitgleich wurde die Innentemperatur so gesteuert, dass sie sich auf 85°C stabil einstellte.
30 Minuten nach Reaktionsstart wurden nochmals 59 kg Vinylacetat und 29 kg einer 20 %-igen Lösung eines Polyvinylalkohols mit einem Hydrolysegrad von 88 Mol-% und einer Viskosität nach Höppler von 4 mPas innerhalb einer Stunde zudosiert. Außerdem wurden 15 kg Ethylen bei 44 bar nachdosiert. Nach 120 Minuten Laufzeit war die Polymerisation beendet und das Reaktionsgemisch wurde in einen Drucklosreaktor entspannt und überschüssiges Ethylen abgetrennt. Restmonomer wurde durch Zugabe von 2.2 kg 10 %-iges tert-Butylhydroperoxid und 4.4 kg 5 %-iges Natriumhydroxymethansulfinat (Brüggolit)verringert.

Man erhielt eine Dispersion mit einem Feststoffgehalt von 57,5 %, einer Viskosität von 1480 mPas (Brookfield 20 bei 23°C), einem pH-Wert von 3,4, einer Tg von +16°C und einem Teilchengrößendurchmesser Dw von 1120 nm. Das freie Restmonomer betrug 150 ppm. Die Wärmeabfuhr über den Wärmetauscher betrug im sauberen Zustand etwa 34 kW. Der Wärmedurchgangskoeffizient betrug 135 W/(m K). Der Röhrenwärmetauscher zeigte im Lauf der Nutzungszeit (50 Chargen) deutliche Wandbelagsbildung, mit entsprechender Reduktion der Kühlleistung.

### Beispiel 1:

Es wurde analog Vergleichsbeispiel 1 vorgegangen, mit dem Unterschied, dass der externe Kühlkreislauf so geschaltet war, dass die U-Rohre vom Kühlwasser durchströmt wurden, und das Polymerisationsgemisch außen an den U-Rohren vorbeigeführt wurde. Die Wärmeabfuhrleistung betrug etwa 73 kW. Der Wärmedurchgangskoeffizient betrug 286 W/(m K). Der Wärmetauscher wurde zwischen jeder Charge mit Wasser gespült. Nach 50 Chargen war keine Wandbelagsbildung festzustellen.

## Patentansprüche

1. Verfahren zur Herstellung von Polymerisaten in Form deren wässrigen Polymerdispersionen mittels radikalisch initiierter Polymerisation in einem Polymerisationsreaktor (1), welcher mit einem externen Kühlkreislauf mit einer Pumpe (3) und mit mindestens einem Wärmetauscher (4) ausgerüstet ist,
**dadurch gekennzeichnet, dass** als Wärmetauscher (4) ein Rohrbündel-Wärmetauscher installiert wird, welcher so betrieben wird, dass das Kühlmittel durch die Rohre (6) des Rohrbündels geführt wird und das zu kühlende Polymerisationsgemisch von außen an die Rohre (6) des Rohrbündels geführt wird.

2. Verfahren nach Anspruch 1, **dadurch gekennzeichnet, dass** die Rohre des Rohrbündels gerade sind.

3. Verfahren nach Anspruch 1, **dadurch gekennzeichnet, dass** die Rohre des Rohrbündels in U-Form vorliegen.

4. Verfahren nach Anspruch 1 bis 3, **dadurch gekennzeichnet, dass** zwischen den Enden der Rohrbündel gelochte Platten (8) mit kreisförmiger oder teilkreisförmiger Ausgestaltung, und quer zur Rohrachse ausgerichtet, angeordnet sind, wobei die Bohrungen (9) der gelochten Platten (8) kreisförmig sind und mit eckigen oder runden Aussparungen (10) erweitert sind.

5. Verfahren nach Anspruch 1 bis 4, **dadurch gekennzeichnet, dass** jeweils nach Abschluss einer Charge oder mehrerer Chargen hintereinander die Rohre des Rohrbündels mit einem Spülmittel umspült werden.

## Claims

1. Process for preparing polymers in the form of their aqueous polymer dispersions by means of free-radically initiated polymerization in a polymerization reactor (1) equipped with an external cooling circuit having a pump (3) and having at least one heat exchanger (4), **characterized in that** the heat exchanger (4) installed is a shell and tube heat exchanger which is operated in such a way that the coolant is passed through the tubes (6) of the tube aggregate and the polymerization mixture to be cooled is guided around the outside of the tubes (6) of the tube aggregate.

2. Process according to Claim 1, **characterized in that** the tubes of the tube aggregate are straight.

3. Process according to Claim 1, **characterized in that** the tubes of the tube aggregate are in U-shaped form.

4. Process according to Claims 1 to 3, **characterized in that** perforated plates (8) of circular or part-circular configuration are disposed between the ends of the tube aggregate, aligned transverse to the tube axis, with holes (9) in the perforated plates (8) that are circular and extended by angular or round cutouts (10).

5. Process according to Claims 1 to 4, **characterized in that** the outside of the tubes of the tube aggregate is rinsed with a rinsing agent on conclusion of each charge or multiple charges in succession.

## Revendications

1. Procédé de fabrication de polymères sous la forme de leurs dispersions polymères aqueuses au moyen d'une polymérisation initiée par voie radicalaire dans un réacteur de polymérisation (1) qui est équipé d'un circuit de refroidissement externe avec une pompe (3) et avec au moins un échangeur de chaleur (4),
**caractérisé en ce que** l'on installe en tant qu'échangeur de chaleur (4) un échangeur de chaleur à faisceau de tubes qui est utilisé de telle sorte que le réfrigérant soit guidé à travers les tubes (6) du faisceau de tubes et que le mélange de polymérisation à refroidir soit guidé depuis l'extérieur sur les tubes (6) du faisceau de tubes.

2. Procédé selon la revendication 1, **caractérisé en ce que** les tubes du faisceau de tubes sont droits.

3. Procédé selon la revendication 1, **caractérisé en ce que** les tubes du faisceau de tubes se présentent en forme de U.

4. Procédé selon les revendications 1 à 3, **caractérisé en ce qu'**entre les extrémités du faisceau de tubes sont disposées des plaques perforées (8) ayant une configuration circulaire ou partiellement circulaire, lesquelles sont orientées transversalement à l'axe des tubes, les orifices (9) des plaques perforées (8) étant circulaires et étant élargis avec des évidements polygonaux ou ronds (10).

5. Procédé selon la revendication 1 à 4, **caractérisé en ce qu'**à chaque fois après la fin d'une charge ou de plusieurs charges successives, les tubes du faisceau de tubes sont rincés avec un agent de rinçage.
